# EUROPEAN PATENT APPLICATION

(11) **EP 2 276 022 A2**
(43) Date of publication of application: **19.01.2011**
(21) Application number: 10185870.2
(22) Date of filing: 08.07.2005
(51) Int. Cl.: G10L 19/00, H04S 3/00

(54) **Multichannel audio data encoding/decoding method and apparatus**

(30) Priority: 14.07.2004 US 587626 P; 16.03.2005 KR 20050021840
(62) Divisional of application: 05254305.5
(71) Applicant: SAMSUNG ELECTRONICS CO., LTD., Suwon-si Gyeonggi-do 442-742 (KR)
(72) Inventor: Oh, Ennmi, Seoul (KR); Kim, Miyoung, Suwon-si Gyeonggi-do (KR); Kim, Sangwook, Seoul (KR); Kim, Dohyung, hwaseong-si Gyeonggi-do (KR); Kim, Junghoe, Seoul (KR)
(74) Representative: Greene, Simon Kenneth

(57) **Abstract**

A multichannel audio data encoding and/or decoding method and apparatus are provided. The encoding method includes: encoding mono and/or stereo audio data; and encoding extended multichannel audio data other than the mono and/or stereo audio data. The decoding method includes: decoding mono and/or stereo audio data; examining whether or not there is extended multichannel audio data to be decoded other than the mono and/or stereo audio data; and if there is extended data to be decoded, decoding the extended multichannel audio data.

According to the method and apparatus, with only one bitstream, mono, stereo, and multichannel can be provided according to a user environment. Also in multichannel audio, a fine grain scalability (FGS) function is provided according to the states of a user terminal and a network. Furthermore, enhancement of the performance of multichannel bit sliced arithmetic coding (BSAC), for example, a high sound quality, low complexity, and scalability, is enabled. In particular, a variety of requirements for MPEG standardization (compatibility with conventional BSAC, maintaining the FGS function, and minimum modification) can be satisfied. Also, the method and apparatus can be employed in more lifelike digital multimedia broadcasting and mobile- and home-theater-based services.

## Description

The present invention relates to audio encoding and decoding, and more particularly, to a multichannel audio data encoding and decoding method and apparatus.

As of 2003, terrestrial digital multimedia broadcasting (DMB) has used an audio codec MPEG-4 bit sliced arithmetic coding (BSAC). Though only stereo is serviced at present, it is expected that multichannel services will be included in the future. The MPEG-4 BSAC should be able to add compression efficiency and function improving technologies, for example, bandwidth extension and spatial audio.

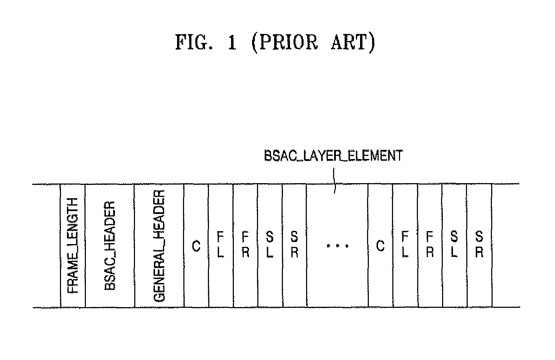

In the conventional BSAC multichannel, center, front left, front right, rear left and rear right channels are coded in one layer alternately, FIG. 1 illustrates the structure of the conventional BSAC multichannel. The BSAC structure provides a fine grain scalability (FGS) function. That is, all five channels are in one layer and data can be cut off from the last layer. Tool side information on a channel should be defined in general_header. High performance compression requires individual side information considering the characteristic in each channel.

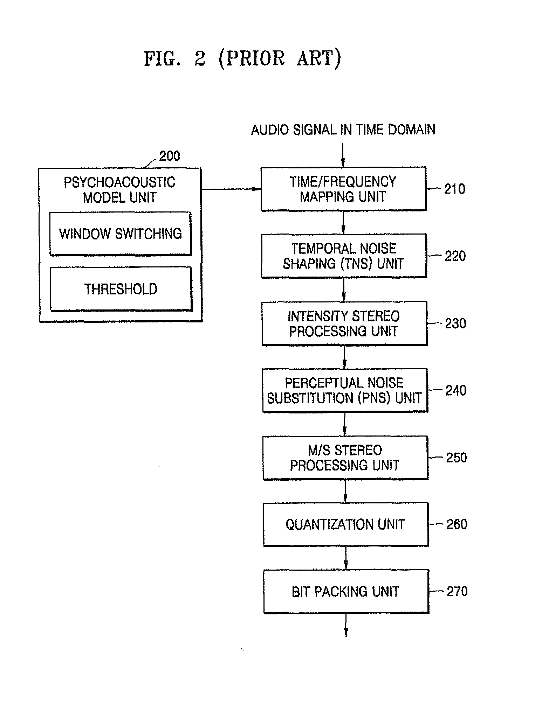

FIG. 2 is a block diagram of functional modules of an audio encoding apparatus using the conventional BASC method. The apparatus includes a psychoacoustic model unit 200, a time/frequency mapping unit 210, a temporal noise shaping (TNS) unit 220, an intensity stereo processing unit 230, a perceptual noise substitution (PNS) unit 240, a mid/side (M/S) stereo processing unit 250, a quantization unit 260, and a bit packing unit 270.

The time/frequency mapping unit 210 converts an audio signal in the time domain into a signal in the frequency domain since the difference between signals that a human being can perceive is not so big with respect to time. However, in the case of the signals in the frequency domain, the difference between a signal that can be perceived by a human being and a signal that cannot be perceived by a human being is big in each bandwidth with respect to a human psychoacoustic model. Accordingly, by varying the number of bits allocated with respect to each frequency bandwidth, the efficiency of compression can be enhanced.

The psychoacoustic unit 200 combines audio signals, which are converted from the time domain into the frequency domain by the time/frequency mapping unit 210, into signals of appropriate subbands, and by using a masking phenomenon occurring by interactions of each signals, calculates a masking threshold in each subband. The TNS unit 220 is used to control the temporal shape of a quantization noise in each conversion window. The TNS is enabled by applying the filtering process of frequency data. This TNS unit 220 is optionally used in an encoder. The intensity stereo processing unit 230 is a devise for processing a stereo signal more efficiently. In this device, only quantized information on a scalefactor band in relation to one of two channels is encoded and only a scalefactor is transmitted in relation to the remaining channel. The unit 230 is not necessarily used in an encoder. In case of a signal having a strong noise characteristic in a current frame, the PNS unit 240 can reduce the amount of generated bits to be used by encoding the energy value of each of frequency components corresponding to a scalefactor band instead of encoding the value of a frequency coefficient. The PNS unit 240 can determine whether or not to use bits in units of scalefactor bands. The M/S stereo processing unit 230 is also a device processing a stereo signal more efficiently. In this device, the signal of a left channel and the signal of a right channel are converted to an added signal and a subtracted signal, respectively, and then these signals are processed. The M/S stereo processing unit is also not necessarily used in an encoder. The quantization unit 260 performs scalar quantization of the frequency signals of each band so that the size of quantization noise in each band is made to be less than the masking threshold such that a human being does not to sense the noise. The bit packing unit 270 collects information items generated in each mode of the encoding apparatus and forms a bitstream according to a syntax generated appropriate to a scalable codec.

However, in the conventional BSAC multichannel structure shown in FIG. 1, mid/side (M/S) stereo cannot be used. This is because in the conventional encoding and decoding syntax, when the number of channels is 2 or more, the M/S stereo function cannot be used. Accordingly, the coding efficiency is lowered. Also, since window switching and PNS should use identical side information to all channels, the coding efficiency is lowered. Furthermore, since 5 channels are all interleaved, a memory 5 times bigger than that of mono audio is required.

According to an aspect of the present invention, there is provided a multichannel audio signal encoding method including: encoding mono and/or stereo audio data; and encoding extended multichannel audio data other than the mono and/or stereo audio data. The mono and/or stereo audio data may have a layered bitrate.

The extended multichannel audio data may include type information of the extended channel indicating at least the configuration of an audio channel and be expressed as a channel configuration index. The encoding of the extended multichannel audio data may include: encoding a predetermined start code (zero_code, syncword) indicating the start of the extended multichannel audio data; and encoding the extended audio data by channel. The start code may include: the zero_code formed with 32 bits of continuous 0's; and the syncword formed with 8 bits of continuous 1's.

The encoding of the extended data by channel may include: encoding the type of the extended channel indicating the configuration of the audio channel; and encoding the extended channel audio data. The type of the extended channel may be formed with a channel configuration index. The encoding of the extended data by channel may include: encoding the length of the extended data; and encoding side information (bsac header, general header).

The encoding of the extended channel audio data may include: encoding a base layer having a lowest bitrate; and encoding an enhancement layer having a higher bitrate than that of the base layer, and if there are a plurality of enhancement layers, increasing a bitrate with the number of the enhancement layers.

According to another aspect of the present invention, there is provided a multichannel audio signal encoding apparatus including: a mono/stereo encoding unit encoding mono and/or stereo audio data; and an extended data encoding unit encoding extended multichannel audio data other than the mono and/or stereo audio data. The mono/stereo encoding unit may encode the mono and/or stereo audio data having a layered bitrate.

The extended multichannel audio data of the extended data encoding unit may include type information of the extended channel indicating at least the configuration of an audio channel and expressed as a channel configuration index. The extended data encoding unit may include: a start code encoding unit encoding a predetermined start code (zero_code, syncword) indicating the start of the extended multichannel audio data; and a channel encoding unit encoding the extended audio data by channel.

The start code of the start code encoding unit may include: the zero_code formed with 32 bits of continuous 0's; and the syncword formed with 8 bits of continuous 1's. The channel encoding unit may include: an extended channel type encoding unit encoding the type of the extended channel indicating the configuration of the audio channel; and an extended audio encoding unit encoding the extended channel audio data. The type of the extended channel may be formed with a channel configuration index. The channel encoding unit may include: an extended data length encoding unit encoding the length of the extended data; and an side information encoding unit encoding side information (bsac header, general header).

The extended audio encoding unit may include: a base layer encoding unit encoding a base layer having a lowest bitrate; and an enhancement layer encoding unit encoding an enhancement layer having a higher bitrate than that of the base layer, and if there are a plurality of enhancement layers, increasing a bitrate with the number of the enhancement layers.

According to still another aspect of the present invention, there is provided a multichannel audio signal decoding method including: decoding mono and/or stereo audio data; checking whether or not there is extended multichannel audio data to be decoded other than the mono and/or stereo audio data; and if there is extended data to be decoded, decoding the extended multichannel audio data. The mono and/or stereo audio data may have a layered bitrate.

The extended multichannel audio data may include type information of the extended channel indicating at least the configuration of an audio channel and expressed as a channel configuration index. In the checking of whether or not extended multichannel audio data exists, the presence of a predetermined start code (zero_code, syncword) indicating the start of the extended multichannel audio data may be checked and if the start code exists, it may be determined that the extended data exists. The start code may include: the zero_code formed with 32 bits of continuous 0's; and the syncword formed with 8 bits of continuous 1's. In the decoding of the extended multichannel audio data, if extended data to be decoded exists, the extended data may be decoded by channel. The decoding of the extended data by channel may include: decoding the type of the extended channel indicating the configuration of the audio channel; and decoding the extended channel audio data. The type of the extended channel may be formed with a channel configuration index.

The decoding of the extended data by channel may include: decoding the length of the extended data; and decoding side information (bsac header, general header). The decoding of the extended channel audio data may include: decoding a base layer having a lowest bitrate; and decoding an enhancement layer having a higher bitrate than that of the base layer, and if there are a plurality of enhancement layers, increasing a bitrate with the number of the enhancement layers.

According to yet still another aspect of the present invention, there is provided a multichannel audio signal decoding apparatus including: a mono/stereo decoding unit decoding mono and/or stereo audio data; an extended data checking unit checking whether or not there is extended multichannel audio data to be decoded other than the mono and/or stereo audio data; and an extended data decoding unit, decoding the extended multichannel audio data if data to be decoded exists. The mono and/or stereo audio data may have a layered bitrate. The extended data checking unit may check by the presence of a predetermined start code (zero_code, syncword) indicating the start of the extended multichannel audio data, and if the start code exists, determine that the extended data exists. The start code may include: the zero_code formed with 32 bits of continuous 0's; and the syncword formed with 8 bits of continuous 1's. If data to be decoded exists, the extended data decoding unit may decode the extended data by channel. The extended data decoding unit may include: an extended channel type decoding unit decoding the type of the extended channel indicating the configuration of the audio channel; and an extended channel audio decoding unit decoding the extended channel audio data. The type of the extended channel may be formed with a channel configuration index.

The extended data decoding unit may include: an extended data length decoding unit decoding the length of the extended data; and an side information decoding unit decoding side information (bsac header, general header). The extended channel audio decoding unit may include: a base layer decoding unit decoding a base layer having a lowest bitrate; and an enhancement layer decoding unit decoding an enhancement layer having a higher bitrate than that of the base layer, and if there are a plurality of enhancement layers, increasing a bitrate with the number of the enhancement layers.

According to a further aspect of the present invention, there is provided a multichannel audio signal encoding method comprising: encoding a base layer of mono/stereo audio data; encoding an enhancement layer of mono/stereo audio data; encoding predetermined start codes (zero_code, syncword) indicating the start of extended multichannel audio data; and encoding a base layer for at least one channel datum that constitutes the extended multichannel audio data and encoding an enhancement layer for the at least one channel datum.

The encoding of the base layer for the at least one channel datum may include: encoding a length of the channel datum; encoding a channel configuration index (channel_configuration_index) indicating the type of the channel; encoding side information (bsac header, general header); and encoding audio data of the base layer.

According to a further aspect of the present invention, there is provided a multichannel audio signal decoding method comprising: decoding a base layer of mono/stereo audio data; decoding an enhancement layer of mono/stereo audio data; checking if there is extended multichannel audio data to be decoded other than the mono/stereo audio data; if there is extended multichannel audio data to be decoded, decoding predetermined start codes (zero_code, syncword) indicating the start of the extended multichannel audio data; and decoding a base layer for at least one channel datum that constitutes the extended multichannel audio data and decoding an enhancement layer for the at least one channel datum.

The decoding of the base layer for the at least one channel datum may include: decoding a length of the channel datum; decoding a channel configuration index (channel_configuration_index) indicating the type of the channel; decoding side information (bsac header, general header); and decoding audio data of the base layer.

According to an additional aspect of the present invention, there is provided a computer readable recording medium having embodied thereon a computer program for executing the multichannel audio data encoding and decoding methods.

The present invention provides a multichannel audio data encoding method and apparatus complying with MPEG standardization which aims to improve the performance of the conventional multichannel BSAC method.

The present invention also provides a multichannel audio data decoding method and apparatus complying with MPEG standardization and improving the performance of the conventional multichannel BSAC.

The above and other features and advantages of the present invention will become more apparent by describing in detail exemplary embodiments thereof with reference to the attached drawings in which:
FIG. 1 illustrates the structure of the conventional bit sliced arithmetic coding (BSAC) multichannel;
FIG. 2 is a block diagram of functional modules of an audio encoding apparatus using the conventional BSAC method;
FIG. 3 is a block diagram of the structure of a multichannel audio data encoding apparatus according to the present invention;
FIG. 4 is a detailed block diagram of an extended data encoding unit;
FIG. 5 is a detailed block diagram of an extended audio encoding unit;
FIG. 6 illustrates a basic data structure for multichannel audio data encoding according to the present invention;
FIG. 7 is a flowchart of the operations performed by a multichannel audio data encoding method according to the present invention;
FIG. 8 is a detailed flowchart of audio data encoding for an extended channel;
FIG. 9 is a block diagram of the structure of a multichannel audio decoding apparatus;
FIG. 10 is a block diagram of an extended data decoding unit of FIG. 9;
FIG. 11 is a block diagram of an extended channel audio decoding unit of FIG. 9;
FIG. 12 is a flowchart of operations of a multichannel audio decoding method according to the present invention;
FIG. 13 is a detailed flowchart of audio data decoding for an extended channel of operation 1230 in FIG. 12;
FIG. 14 illustrates the syntax of Bsac_raw_data_block() showing an embodiment of operations 1200 through 1240 in FIG. 13;
FIG. 15 illustrates the syntax of extended_bsac_raw_data_block() showing an embodiment of each extended audio channel decoding;
FIG. 16 illustrates the syntax for an example of extended_bsac_base_element() for operation 1100; and

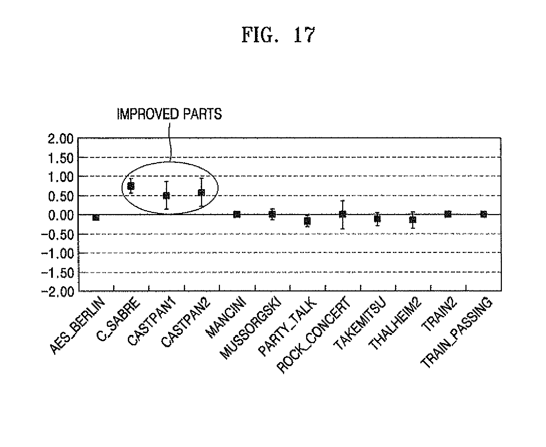

FIG. 17 illustrates the test result of measuring sound quality by using a multichannel audio signal encoding and/or decoding method and apparatus according to the present invention.

A multichannel audio encoding and/or decoding apparatus and method according to the present invention will now be described more fully with reference to the accompanying drawings, in which exemplary embodiments of the invention are shown.

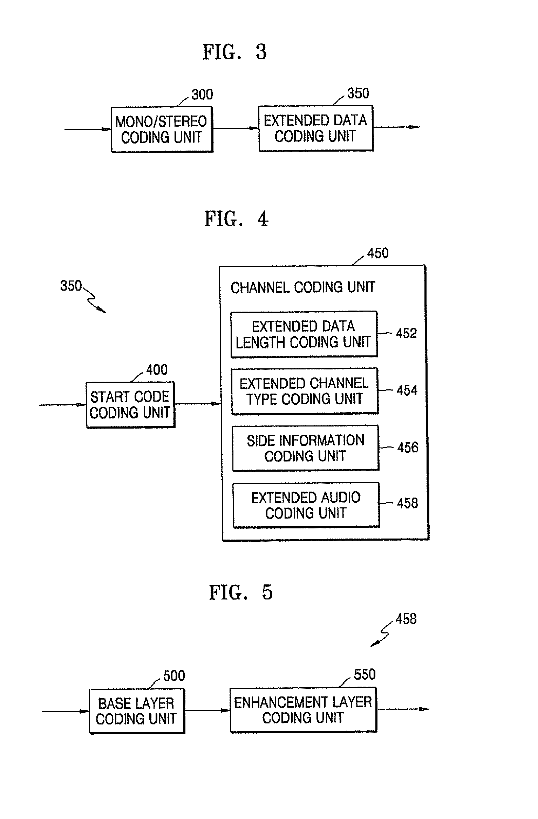

First, the multichannel audio encoding apparatus and method will be explained. FIG. 3 is a block diagram of the structure of a multichannel audio data encoding apparatus according to the present invention. The apparatus includes a mono/stereo encoding unit 300 and an extended data encoding unit 350.

The mono/stereo encoding unit 300 encodes mono or stereo audio data. Preferably, the mono/stereo encoding unit 300 encodes mono or stereo audio data having layered bitrates. In particular, it is preferable that the mono or stereo audio data be encoded in a bit sliced arithmetic coding (BSAC) method according to ISO/IEC 14496-3. Because the audio encoding of the BSAC method is a known technology, the explanation thereof will be omitted here.

The extended data encoding unit 350 encodes extended multichannel audio data in addition to the mono or stereo audio data.

Preferably, the extended multichannel audio data includes at least the type information of an extended channel indicating the configuration of an audio channel, and the extended channel type information is expressed as a channel configuration index (channel_configuration_index). Preferably, the channel configuration index has a 3-bit field indicating the audio output channel configuration as shown in Table 1. Thus the channel configuration index indicates the characteristic of each speaker corresponding to a channel.

**Table 1**

| Index | Channel to speaker mapping | Number of channels (nch) |
|---|---|---|
| 0 | center front speaker | 1 |
| 1 | left, right front speaker | 2 |
| 2 | rear surround speakers | 1 |
| 3 | left surround, right surround rear speakers | 2 |
| 4 | front low frequency effects speaker | 1 |
| 5 | left, right outside front speakers | 2 |
| 6-7 | reserved | - |

FIG. 4 is a detailed block diagram of the extended data encoding unit 350 including a start code encoding unit 400 and a channel encoding unit 450. The start code encoding unit 400 encodes a predetermined start code indicating the start of extended multichannel audio data. The start code is formed with a zero_code and a syncword. The zero_code is formed by 32 bits of continuous 0's indicating completion of arithmetic decoding of stereo audio data. The syncword is formed by 8 bits of continuous 1's indicating the start of extended multichannel audio data. The bit string is 1111 1111.

The channel encoding unit 450 encodes extended audio data in each channel, and is formed with an extended channel length encoding unit 452, an extended channel type encoding unit 454, an side information encoding unit 456, and an extended audio encoding unit 458.

The extended channel length encoding unit 452 encodes the length of extended data. The extended data length information is used when arithmetic decoding is performed.

The extended channel type encoding unit 454 encodes the type of an extended channel indicating the configuration of an audio channel. The side information encoding unit encodes side information (bsac_header, general_header). The side information (bsac_header, genera!_header) is the same as the side information used when the mono or stereo audio data is encoded in the BSAC method. The extended audio encoding unit 458 encodes extended channel audio data.

FIG. 5 is a detailed block diagram of the extended audio encoding unit 458. The extended audio encoding unit 458 includes a base layer encoding unit 500 and an enhancement layer encoding unit 550. The base layer encoding unit 500 encodes a base layer having a lowest bitrate. The enhancement layer encoding unit 550 encodes an enhancement layer which has a higher bitrate than that of the base layer, and if there are a plurality of layers, increases the bitrate with the number of the layers.

The present invention uses a method of extending channels in the conventional stereo bitstream. A channel configuration index is assigned to each channel element and the possibility of modifying side information on each available tool when audio is encoded is indicated. Since there is a general header in each channel element of window, M/S, and PNS information, all tools requiring modification can be modified.

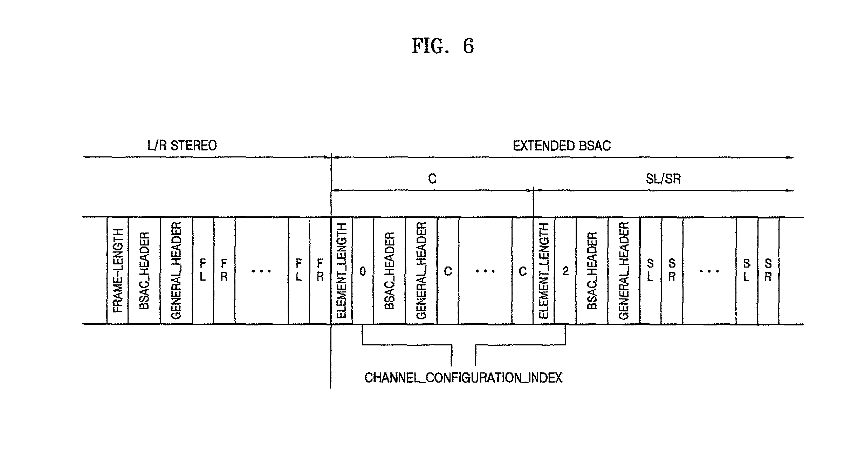

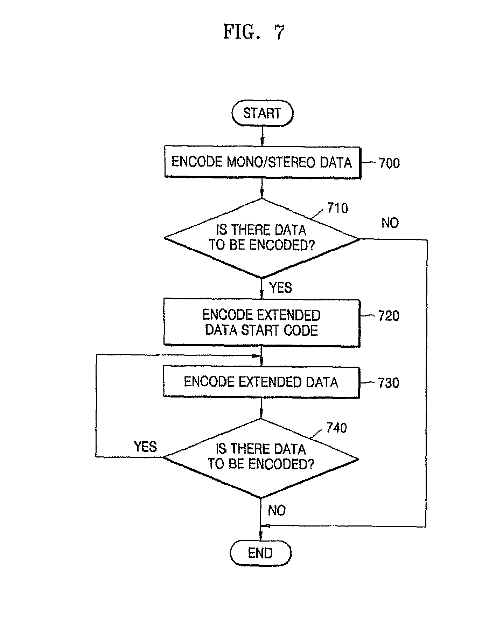

FIG. 6 illustrates a basic data structure for multichannel audio data encoding according to the present invention. FIG. 7 is a flowchart of operations of a multichannel audio data encoding method according to the present invention. Referring to FIGS. 6 and 7, the operations of a multichannel audio encoding method and apparatus according to the present invention will now be explained.

First, mono or stereo audio data is encoded in the mono/stereo encoding unit 300 in operation 700. Then, extended multichannel audio data other than the mono or stereo audio is encoded in the extended data encoding unit 350. Preferably, the mono or stereo data has layered bitrates as described above. Also, the extended multichannel audio data includes the type information of the extended channel described above, indicating at least the configuration of an audio channel and expressed as a channel configuration index.

Encoding of the extended multichannel audio data will now be explained in more detail. Mono or stereo audio data is encoded and then it is checked whether data to be encoded exists in operation 710. If data to be encoded exists, a predetermined start code (zero_code, syncword) indicating the start of extended multichannel audio data is encoded in the start code encoding unit 400 in operation 720. The start code is the same as in the encoding apparatus described above. Then, extended audio data for each channel is encoded through the channel encoding unit 450. Here, extended audio data for one channel is first encoded in operation 730 and when the encoding of the channel is completed, it is checked whether or not audio data to be encoded for another channel exists in operation 740. If audio data to be encoded for another channel exists, the audio data for the channel is encoded. This process is performed for all extended channels.

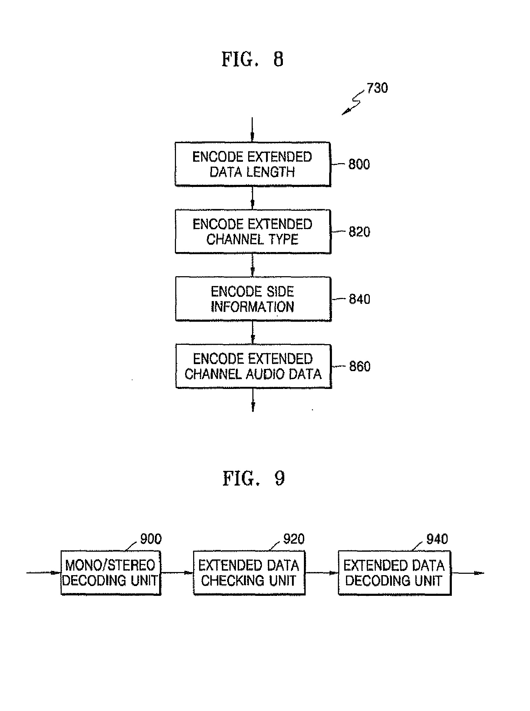

FIG. 8 is a detailed flowchart of the audio data encoding for an extended channel in the operation 730. The length of the extended data is encoded in the extended data length encoding unit 452 in operation 800. Also, the type of the extended channel indicating the configuration of the audio channel is encoded in the extended channel type encoding unit 454 in operation 820. Side information (bsac header, general header) is encoded in the side information encoding unit 456 in operation 840. Then, the extended channel audio data is encoded in the extended audio encoding unit 458 in operation 860.

In the encoding of the extended channel audio data in operation 860, first, the audio data in the base layer having a lowest bitrate is encoded in the base layer encoding unit 500, and then the audio data of an enhancement layer is encoded in the enhancement layer encoding unit 550. The enhancement layer has a bitrate higher than that of the base layer. When a plurality of enhancement layers exists, a bitrate is increasing with the number of the enhancement layers.

Meanwhile, a multichannel audio decoding apparatus and method according to the present invention will now be explained. Basically, the multichannel audio decoding performs operations in the reverse order of the encoding operations.

FIG. 9 is a block diagram of the structure of a multichannel audio decoding apparatus. The apparatus includes a mono/stereo decoding unit 900, an extended data checking unit 920, and an extended data decoding unit 940.

The mono/stereo decoding unit 900 decodes mono or stereo audio data. Preferably, the mono or stereo audio data has a layered bitrate and is decoded in the BSAC method according to the ISO/IEC 14496-3.

The extended data checking unit 920 checks whether or not there is extended multichannel audio data to be decoded in addition to the mono or stereo audio data. The extended data checking unit 920 checks the presence of a predetermined start code (zero_code, syncword) indicating the start of extended multichannel audio data, and if there is the start code, determines that there is extended data. The start code is formed with a zero_code and a syncword. The zero_code is formed by 32 bits of continuous 0's indicating completion of arithmetic decoding of stereo audio data. The syncword is formed by 8 bits of continuous 1's indicating the start of extended multichannel audio data. The bit string is 1111 1111.

The extended data decoding unit 940 decodes extended multichannel audio data if the extended data to be decoded exists. Also, it is preferable that the extended data decoding unit 940 decodes extended data by channel when decoding is performed.

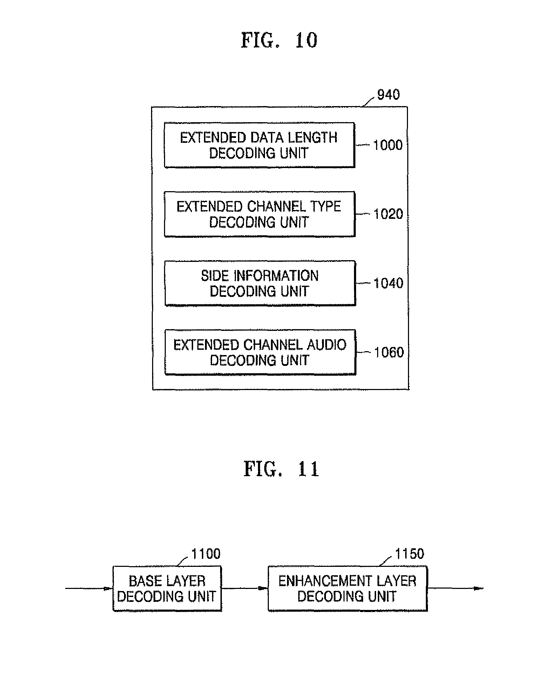

FIG. 10 is a block diagram of the extended data decoding unit 940 of FIG. 9, which is formed with an extended data length decoding unit 1000, an extended channel type decoding unit 1020, a side information decoding unit 1040, and an extended channel audio decoding unit 1060.

The extended data length decoding unit 1000 decodes the length information of the extended data. The extended channel type decoding unit 1020 decodes the type of the extended channel indicating the configuration of the audio channel, Preferably, the extended channel type information is expressed as a channel configuration index (channel_configuration_index). The channel configuration index defines the number of the channels when the channels are mapped to a speaker, and has a 3-bit field indicating the audio output channel configuration as shown in the table 1.

The side information decoding unit 1040 decodes side information. The side information is required for decoding audio data and is information other than the audio data, such as a bsac header and a general header. Basically, the side information (bsac_header, general_header) is the same as the side information required for decoding mono or stereo audio data in the BSAC method.

The extended channel audio decoding unit 1060 decodes extended audio data. FIG. 11 is a block diagram of the extended channel audio decoding unit 1060 of FIG. 9, including a base layer decoding unit 1100 and an enhancement layer decoding unit 1150. The base layer decoding unit 1100 decodes the base layer having a lowest bitrate. The enhancement layer decoding unit 1150 decodes an enhancement layer which has a higher bitrate than that of the base layer, and if there are a plurality of layers, increases the bitrate increasing with the increasing number of the layers

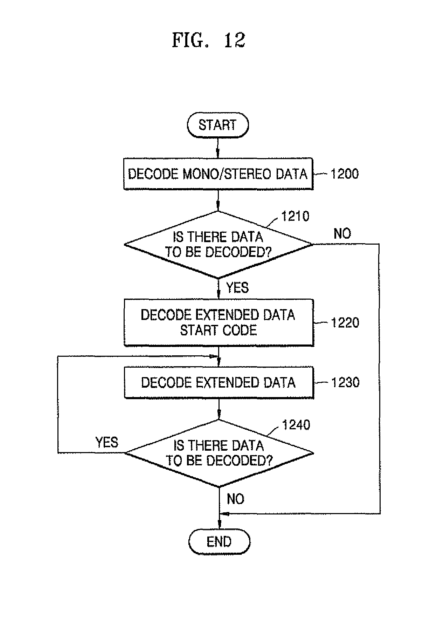

FIG. 12 is a flowchart of the operations performed by a multichannel audio decoding method according to the present invention. Referring to FIG, 12, the operations of the multichannel audio data decoding method and apparatus according to the present invention will now be explained.

First, mono or stereo audio data is decoded through the mono/stereo decoding unit 900 in operation 1200. Then, it is checked by the extended data checking unit 920 whether or not there is extended multichannel audio data in addition to the mono/stereo audio data in operation 1210. The presence of the extended multichannel audio data is determined by decoding a predetermined start code (zero_code, syncword) indicating the start of extended multichannel audio data, and checking the presence of the start code in operation 1220. If there is the start code, it is determined that the extended data exists. That is, if there is the zero_code, it indicates that decoding of the mono or stereo audio data is completed and if there is the syncword after that, it indicates that there is multichannel audio data to be decoded.

If it is determined through the start code that there is extended data to be decoded, the extended multichannel audio data is decoded through the extended data decoding unit 940 in operation 1230.

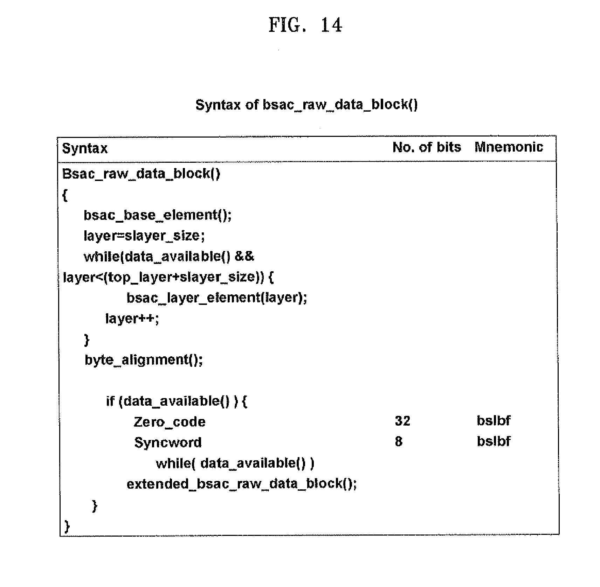

An embodiment of the operations 1200 through 1230 is expressed in syntax (Bsac_raw_data_block()) as shown in FIG. 14.

Referring to FIG. 14, Bsac_raw_data_block() is a raw data block containing encoded audio data, related information and other data, and is basically formed with a bsac_base_element() and several bsacjayer_e!ement()s. Bsac_raw_data_block() is a module for determining whether or not a bsac bitstream has an extended part. Preferably, the mono or stereo data has layered bitrates as described above. Also, the extended multichannel audio data includes the type information described above of the extended channel, indicating at least the configuration of an audio channel and expressed as a channel configuration index.

After the extended audio data in relation to one channel is decoded in operation 1230, it is checked whether or not there is audio data for another channel to be decoded in operation 1240. If there is audio data for another channel to be decoded, the audio data for the other channel is decoded. By performing this process for all extended channels, all the extended channel audio data are decoded.

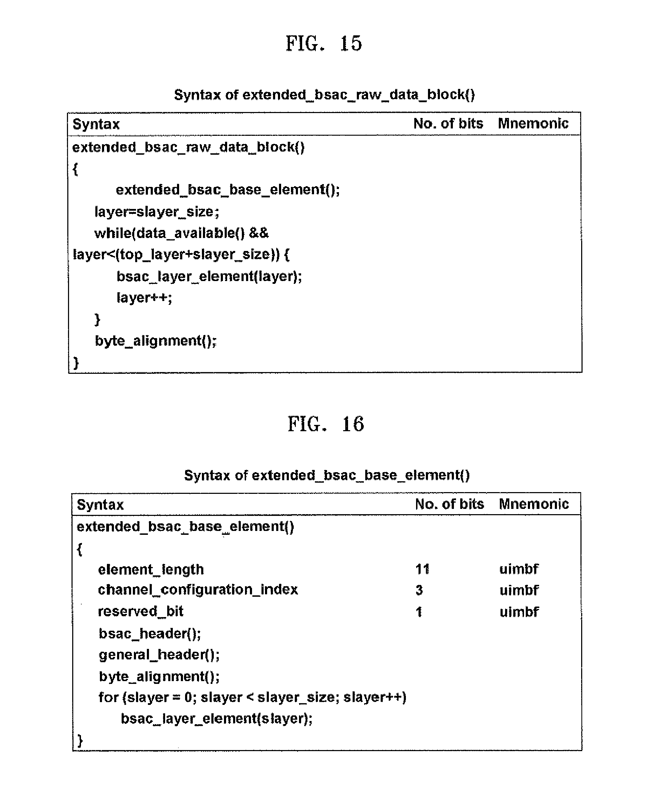

Syntax (extended_bsac_raw_data_block()) showing an embodiment of the decoding of each audio channel is shown in FIG. 15.

Referring to FIG. 15, the extended_bsac_raw_data_block() is a raw data block including encoded audio data corresponding to multichannel extended data, and information related to the audio data. The extended_bsac_raw_data_block() is basically formed with an extended_bsca_base_element() and several bsac_layer_eiement()s.

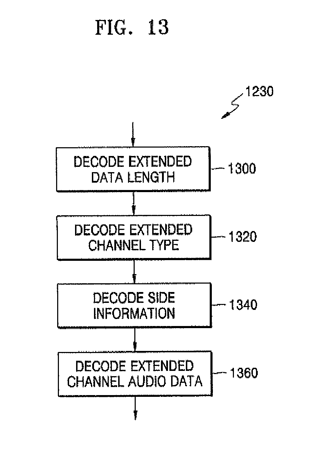

FIG. 13 is a detailed flowchart of audio data decoding for an extended channel of the operation 1230. In the extended data length decoding unit 1000, the length of the extended data is decoded in operation 1300. Also, in the extended channel type decoding unit 1020, the type of the extended channel indicating the configuration of the audio channel is decoded in operation 1320. In the side information decoding unit 1040, the side information (bsac header, general header) is decoded in operation 1340. The performing order of the decoding operations 1300 through 1340 does not matter. Then, the extended channel audio data is decoded in the extended channel audio decoding unit 1060 in operation 1360.

In the decoding of the extended channel audio data in the operation 1360, the audio data of the base layer having a lowest bitrate is first decoded in the base layer decoding unit 1100, and then, the audio data of the enhancement layer is decoded in the enhancement layer decoding unit 1150. The enhancement layer has a higher bitrate than that of the base layer and, if there are a plurality of enhancement layers, increases a bitrate with the number of the enhancement layers. An embodiment of syntax(extended_bsac_raw_data_block()) for the operation 1230 is shown in FIG. 16.

Referring to FIG. 16, the extended_bsac_base_element() is a syntactic element of a base layer bitstream, containing the encoded audio data corresponding to a BSAC extended part and information related to the audio data.

The present invention can also be embodied as computer (including all apparatuses having an information processing function) readable codes on a computer readable recording medium. The computer readable recording medium is any data storage device that can store data which can be thereafter read by a computer system. Examples of the computer readable recording medium include read-only memory (ROM), random-access memory (RAM), CD-ROMs, magnetic tapes, floppy disks, and optical data storage devices.

While the present invention has been particularly shown and described with reference to exemplary embodiments thereof, it will be understood by those of ordinary skill in the art that various changes in form and details may be made therein without departing from the spirit and scope of the present invention as defined by the following claims. The preferred embodiments should be considered in descriptive sense only and not for purposes of limitation. Therefore, the scope of the invention is defined not by the detailed description of the invention but by the appended claims, and all differences within the scope will be construed as being included in the present invention.

According to the multichannel audio encoding and/or decoding apparatus and method of the present invention, the memory requirement for multichannel data interleaving is about 20% less than that of the memory requirement using the conventional BSAC method. This is because when the multichannel method according to the present invention is used, channel elements being added are sequentially processed and therefore the amount of the simultaneous memory usage is relatively small, while in the conventional multichannel method, all the data of the entire multichannel should be loaded on the memory.

The result of measuring sound quality by using the multichannel audio signal encoding and/or decoding method and apparatus according to the present invention is shown in FIG. 14.

The listening experiment conditions were as follows. A window switching & M/S stereo tool was used and bitrates were controlled in each of the front and rear channel elements. Four audio experts participated in the experiment, and the relative sound quality (-2 - +2) in relation to the conventional BSAC was measured. For the test items, a total member of 46 items used for MPEG-2 NBC were selected.

According to the multichannel audio encoding and/or decoding method and apparatus of the present invention, with only one bitstream, mono, stereo, and multichannel audio can be provided according to a user environment. Also in multichannel audio, an FGS function is provided according to the states of a user terminal and a network. Furthermore, enhancement of the performance of multichannel BSAC, for example, a high sound quality, low complexity, and scalability, is enabled. In particular, a variety of requirements for MPEG standardization (compatibility with conventional BSAC, maintaining the FGS function, and minimum modification) can be satisfied. Also, the method and apparatus can be employed in more lifelike digital multimedia broadcasting and mobile- and home-theater-based services.

## Claims

1. A multichannel audio signal encoding method comprising:
encoding audio data;
encoding predetermined codes indicating the end of the encoded audio data;
encoding predetermined codes indicating the start of the extended data;
encoding the type of the extended data which extend the channel of audio data to multi-channel; and
encoding multi-channel audio data other than the mono and/or stereo audio data.

2. The method of claim 1, wherein the encoding of the multi-channel audio data comprises:
encoding a base layer having a lowest bitrate; and
encoding an enhancement layer having a higher bitrate than that of the base layer, and when there are a plurality of enhancement layers, increasing a bitrate increasing with the number of the enhancement layers.

3. A multichannel audio signal decoding method comprising:
decoding audio data;
decoding predetermined codes indicating the end of the encoded audio data;
decoding predetermined codes indicating the start of the extended data;
checking whether or not the type of the extended data indicates extending the channel of audio data; and
if the type of extended data indicates extending the channel of audio data, decoding multi-channel audio data other than the mono and/or stereo audio data.

4. The multichannel audio signal decoding method according to claim 3, wherein the decoding of predetermined codes indicating the end of the encoded audio data is preceded by the step of checking whether or not there remains data not yet decoded, and wherein the decoding of predetermined codes indicating the end of the encoded audio data is undertaken if there is data not yet decoded.

5. The multichannel audio signal decoding method according to claim 3, wherein the decoding of audio data comprises:
decoding a base layer of mono/stereo audio data; and
decoding an enhancement layer of mono/stereo audio data.

6. A multichannel audio signal decoding method comprising:
decoding audio data encoded with scalability;
decoding Zero_code;
decoding Sync_word;
checking whether or not the type of the extended data indicates extending the channel of audio data; and
if the type of the extended data indicates extending the channel of audio data, decoding multi-channel audio data with scalability.

7. The multichannel audio signal decoding method according to claim 3, wherein the decoding of multi-channel audio data comprises:
decoding a base layer for at least one channel data that constitutes the multi-channel audio data and decoding an enhancement layer for the at least one channel data.

8. The multichannel audio signal decoding method according to claim 7, wherein the decoding of the base layer for the at least one channel data comprises:
decoding a length of the channel data;
decoding a channels configuration index (channel_configuration_index) indicating the type of the channel;
decoding side information (bsac header, general header); and
decoding audio data of the base layer.

9. A computer readable medium having embodied thereon a computer program for the method of any of claims 1 through 8.
